# EUROPÄISCHE PATENTSCHRIFT

(11) **EP 0 826 409 B1**
(45) Veröffentlichungstag und Bekanntmachung des Hinweises auf die Patenterteilung: **10.12.2003**
(21) Anmeldenummer: 97111591.0
(22) Anmeldetag: 09.07.1997
(51) Int. Cl.: B01D 53/86, B01J 21/06, B01D 53/94

(54) **DeNOx-Verfahren für staubhaltige Abgase**
DeNOx process for dust-laden waste gases
Procédé de réduction de la concentration d'oxydes d'azote dans des gaz effluents contenant des poussières

(30) Priorität: 31.08.1996 DE 19635383
(43) Veröffentlichungstag der Anmeldung: 04.03.1998
(73) Patentinhaber: KWH Katalysatoren GmbH, 45764 Marl (DE)
(72) Erfinder: Schäfer, Norbert, 45721 Haltern (DE); Schlüter, Andreas, 48249 Dülmen (DE); Ollenik, Reiner, Dr., 45768 Marl (DE)
(74) Vertreter: Rohmann, Michael, Dr.

(56) Entgegenhaltungen:
- EP-A- 0 415 145
- WO-A-97/09112
- DE-A- 2 658 539
- DE-A- 3 531 871
- DE-A- 4 419 974
- US-A- 4 054 418
- US-A- 4 755 500

## Beschreibung

Die vorliegende Erfindung betrifft ein Verfahren zur reduktiven Zerstörung von Stickstoffoxiden in Abgasen mit einem waben- bzw. zellenförmigen Katalysator.

Bei der Verbrennung fossiler Energieträger entstehen neben Kohlendioxid und Wasser auch Schwefeloxide und Stickstoffoxide (nachfolgend kurz Stickoxide genannt), die eine Umweltbelastung darstellen. In den zurückliegenden Jahren wurden erhebliche Anstrengungen unternommen, die Schwefelund Stickoxidemissionen zu mindern, so z. B. in Kohlekraftwerken. Zur reduktiven Zerstörung von Stickoxiden in Abgasen haben sich ganz besonders waben- bzw. zellenförmige Katalysatoren bewährt. Der zur Stickoxidminderung in Kraftwerken überwiegend eingesetzte DeNOx-Katalysator besteht aus einer Vielzahl einzelner Strukturkörper, wobei jeder Strukturkörper wiederum eine Vielzahl paralleler Kanäle besitzt, deren Achsen alle in Richtung des Gasstromes orientiert sind. Oft sind die Abgase aus den Verbrennungsprozessen mit Asche, Staub sowie Ruß (nachfolgend kurz Staub genannt) beladen, so dass die Kanäle den Strukturkörper verstopfen. Für die Energiegewinnung können in einigen Kohlekraftwerken auch Kohlesorten mit hohem Ballastanteil eingesetzt werden. In solchen Kraftwerken ist das Rauchgas vor dem Elektrofilter mit einem besonders hohen Staubanteil beladen, meist mit mehr als 5 g Staub/Nm³ Abgas. Auch beobachtet man, dass im Abgas hinter Kessel recht grobe Staubpartikel auftreten. Solche Grobpartikel können ihrerseits gleich einzelne Kanäle bis hin zu größeren Bereichen der in sogenannter "High Dust"-Schaltung eingesetzten Katalysatoren verstopfen. Die Folgen sind letztendlich außerplanmäßige und kostspielige Abstellungen der betroffenen Kohlekraftwerke für die Durchführung von Reinigungsmaßnahmen in den sogenannten SCR-Reaktoren (SCR = selective catalytic reduction).

Aus EP-A 0 415 145 ist ein Verfahren der eingangs genannten Art bekannt, bei dem mit einem waben- bzw. zellenförmigen Katalysator gearbeitet wird, der als Hauptbestandteil Titanoxid aufweist. Dieser Katalysator hat eine offene Frontfläche von 80 bis 90 %. Die Trennwände bzw. Innenwände der Strukturkörper dieses Katalysators besitzen eine Wandstärke von 0,2 bis 0,8 mm, vorzugsweise von 0,2 bis 0,7 mm. Die Kanäle des Katalysators weisen einen hydraulischen Durchmesser von 2 bis 7 mm auf. Für Abgase mit hohen Staubgehalten und mit großen Staubpartikeln hat sich dieser Katalysator nicht bewährt.

Es ist bekannt, dass man gemäß der DE-OS 24 58 888 einen Katalysator auf Titandioxidbasis mit weiteren metalloxidischen bzw. sulfatischen Komponenten zur reduktiven Zerstörung von Stickoxiden in Gegenwart von molekularem Sauerstoff und Ammoniak bei Temperaturen im Bereich von 150 bis 550 °C und Raumgeschwindigkeiten von 300 bis 100.000 h⁻¹ insbesondere für Abgase in Kraftwerken einsetzen kann. Ein Verfahren zur Herstellung solcher Katalysatoren auf Titanoxidbasis ist beispielsweise in der DE-PS 26 58 569 beschrieben. Auch aus der DE-OS 39 06 136 ist ein sogenannter DeNOx-Katalysator auf Titandioxidbasis und ein Verfahren zu seiner Herstellung zu entnehmen.

Die DE-PS 26 58 539 lehrt ein Verfahren zur reduktiven Zerstörung von Stickoxiden in Abgasen mit einem waben- bzw. zellenförmigen Katalysator, wobei der Katalysator aus monolithischen Strukturkörpern besteht, die von parallel zu ihrer Längsachse verlaufenden Kanälen mit waben- bzw. zellenförmigem Querschnitt durchzogen sind, eine offene Frontfläche von mehr als 50 % besitzen und die Kanäle einen hydraulischen Durchmesser größer als 2 mm aufweisen und ferner unter Betriebsbedingungen mit einer Abgasgeschwindigkeit von mehr als 0,5 m/s durchströmt werden. Als Katalysator werden hier Strukturkörper unter anderem mit einem hydraulischen Durchmesser von 7 mm und γ-Al₂O₃, V₂O₅ und Cr₂O₃ auf einem Cordierit-Keramikträger offenbart. Solche Katalysatoren haben sich in schwefeloxidhaltigen Abgasen aus Kohlekraftwerken leider nicht bewährt, da durch einen chemischen Abbau insbesondere des Aluminiumoxids der Katalysator zerfällt bzw. unter mechanischer Belastung durch Flugstaub dann sehr leicht abgetragen wird.

Nun sind für die Minderung der NOx-Gehalte in Abgasen aus Verbrennungsanlagen waben- bzw. zellenförmige Katalysatoren auf Titandioxidbasis als Strukturkörper mit Kanälen (nachfolgend auch kurz Zellen genant, soweit dies die Querschnittsfläche der Kanäle betrifft), die einen hydraulischen Durchmesser (4a/U = dₕ mit a = lichte Querschnittsfläche einer Zelle im Strukturkörper, U = Umfang der lichten Querschnittsfläche einer Zelle und dₕ = hydraulischer Durchmesser) von rund 3,0 mm, 3,5 mm, 4,1 mm, 5,0 mm, 5,7 mm, 6,0 mm und 6,2 mm besitzen, im Markt, vgl. Dechema Monographien, Vol. 118 (1989), Seiten 73 bis 80. Diese Katalysatorstrukturkörper bestehen nahezu vollständig aus katalytischem Material, sogenannte Vollkatalysatoren. Seit kurzem werden Vollkatalysatoren auf Titandioxidbasis mit sehr hohen Vanadiumoxidgehalten (GOMI-Typ) als 10,0er Pitch (10,0 p) angeboten, d. h. dass der kürzeste Abstand von Steg- bzw. Wandmitte zu Wandmitte über eine quadratische Zelle in der Querschnittsfläche eines Strukturkörpers 10,0 mm beträgt, das entspricht bei einer Wandstärke von durchschnittlich 1,4 mm einem hydraulischen Zellendurchmesser von dₕ = 8,5 mm. Ein solcher 10, 0 p-Vollkatalysator weist eine spezifische Oberfläche von 340 m² pro 1 m³ Strukturkörper auf, wobei einem Strukturkörper eine Querschnittsfläche von 150 x 150 mm zugrundegelegt wird. Aufgrund hoher SO₂/SO₃-Konversionsraten, bedingt durch die hohen Vanadiumoxid-Gehalte, ist dieser 10,0 p-Katalysator vom GOMI-Typ nur für den Einsatz in Abgasen mit sehr geringen SOx-Gehalten geeignet.

Ein marktgängiger 7,4 p-Katalysator der oben genannten Art (Abstand Stegmitte zu Stegmitte 7,4 mm mit dₕ = 6,2 mm) weist eine spezifische Oberfläche von 444 m²/m³ auf. Für den 7,4 p-Katalysator besteht gegenüber dem 10,0 p-Katalysator zwar der Vorteil eines vergleichsweise geringeren Gesamtkatalysatorvolumens, jedoch verstopft der 7,4 p-Katalysator rasch unter Einsatzbedingungen in stark staubhaltigem Abgas. Insbesondere in ballastkohlebefeuerten Kraftwerken, wo der Staub auch zu sogenannten Anbackungen führen kann, verstopft der 7,4 p-Katalysator sehr rasch. Wie oben bereits erwähnt, können in der Flugasche solcher Rauchgase auch gröbere Partikel vorkommen. Solche groben Staubpartikel besitzen oft sehr viel Energie und können auf die Anströmseite der Strukturkörper treffen und sich dort ablagern, aber zumindest für einen stetigen Abtrag des Vollkatalysators sorgen. Auch durch sogenanntes Rußblasen können solche Verstopfungen und Anbackungen meist nicht mehr beseitigt werden, so dass mechanische Reinigungsmaßnahmen erforderlich werden und das gesamte Kraftwerk für mehrere Tage abgestellt werden muss, um den Reaktor begehbar zu machen. Für solche Fälle plant man, Katalysatoren mit 10,0 p oder einem noch größeren Pitch und geeigneter Katalysatorzusammensetzung zum Einsatz zu bringen. - Aber aus den vorliegenden Fakten und trotz der Tatsache, dass der 10,0 p-Katalysator gegenüber dem 7,4 p-Katalysator einen größeren Reaktor mit mehr Fassungsvolumen erfordert und ein höheres Investment und mehr Platz für den Reaktor bedingt, hat man bisher keine weiteren Lehren zum technischen Handeln gezogen.

Der Erfindung liegt die Aufgabe zugrunde, ein Verfahren der eingangs genannten Art anzugeben, bei dem bei Behandlung von staubhaltigen Abgasen mit Grobpartikelanteil Verstopfungen wirksam vermieden werden können und bei dem eine hohe Effektivität, d. h. eine effektive Minderung der Stickstoffoxidgehalte bei nichtsdestoweniger geringem Katalysatorvolumen gewährleistet ist.

Diese Aufgabe wird durch die Merkmalskombination des geltenden Patentanspruches 1 gelöst. Die Patentansprüche 2 bis 11 betreffen bevorzugte Ausführungsformen des erfindungsgemäßen Verfahrens.

Es wurde nun gefunden, dass waben- bzw. zellenförmige Katalysatoren, die als Hauptbestandteil Titandioxid enthalten und die Kanäle der Katalysatorstrukturkörper einen hydraulischen Durchmesser von 6,8 mm bis 7,8 mm, vorzugsweise 6,9 mm bis 7,3 mm, besonders bevorzugt 7,1 mm bis 7,3 mm, aufweisen, zur reduktiven Zerstörung von Stickoxiden insbesondere in sehr staubhaltigen Abgasen in hervorragender Weise geeignet sind, da diese unter Einsatzbedingungen in Abgasen mit 2 bis 200 g Staub/Nm³, besonders vorzugsweise 2 bis 150 g Staub/Nm³, ganz besonders vorzugsweise 3 bis 50 g Staub/Nm³, praktisch kaum noch verstopfen und bei einer spezifischen Oberfläche von vorzugsweise 385 bis 440 m²/m³, besonders vorzugsweise 390 bis 425 m²/m³, auch nur ein vergleichsweise geringes Katalysatorvolumen für die erforderliche NOx-Abscheideleistung bedingen, so dass durch den Einsatz erfindungsgemäßer Katalysatoren auch ein wirtschaftlicher Vorteil für den Kraftwerksbetreiber erzielbar wird. Um den Katalysatorreaktor am Kraftwerk darüber hinaus möglichst klein zu halten, werden beim erfindungsgemäßen Verfahren bevorzugt nur solche Strukturkörper verwendet, die in Strömungsrichtung eine Länge von mindestens 100 cm aufweisen. Geeigneterweise durchströmt man den Katalysator unter Einsatzbedingungen mit einer Abgasgeschwindigkeit von 1 bis 10 m/s i. N.. Die Kanäle der Strukturkörper des Katalysators weisen erfindungsgemäß einen hydraulischen Durchmesser von 6,8 mm bis 7,8 mm auf. Geeigneterweise besitzen alle Kanäle eines Strukturkörpers sowie alle Kanäle der Strukturkörper, die im SCR-Reaktor zu einem Katalysator bzw. Katalysatorbett zusammengefügt werden, einen im Wesentlichen einheitlichen hydraulischen Durchmesser.

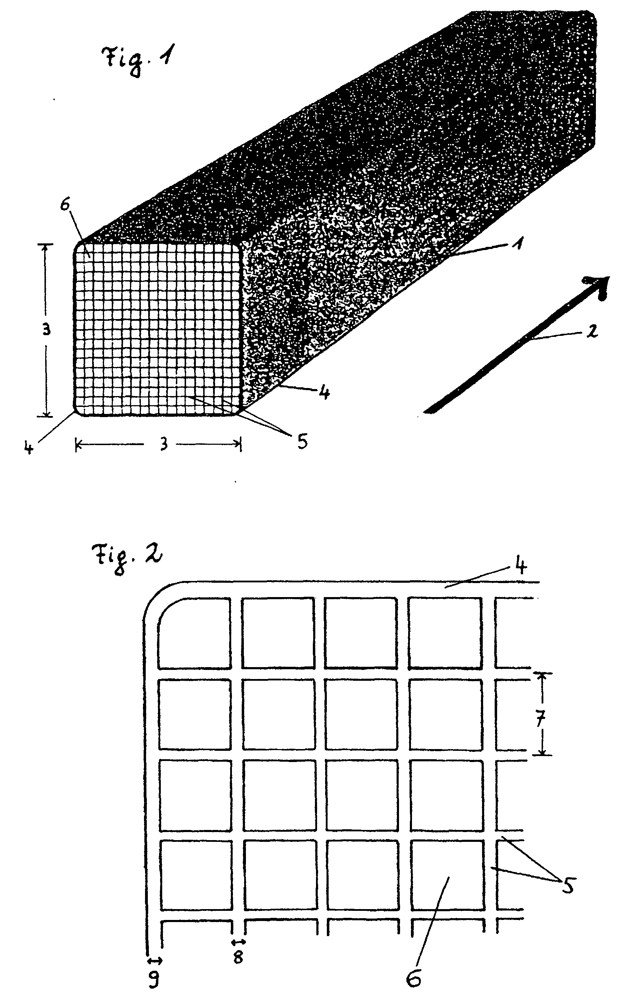

Im Allgemeinen legt man einem Strukturkörper des Katalysators eine quadratische Querschnittsfläche mit Außenabmessungen von 150 x 150 mm zugrunde, vgl. Fig. 1 und 2. Bedingt durch die Fertigung weist er üblicherweise eine quadratische Querschnittsfläche mit Außenabmessungen von 146 x 146 mm bis 156 x 156 mm auf. Vorzugsweise besitzen die Zellen in der Querschnittsfläche des Katalysators einen im Wesentlichen quadratischen Querschnitt, wobei die Querschnittsfläche eines Strukturkörpers des Katalysators bevorzugt 18 x 18 oder 17 x 17 Zellen aufweist. Die Zellen der eingesetzten Katalysatoren können in der Querschnittsfläche aber auch eine andere Geometrie besitzen, beispielsweise eine rechteckige oder auch eine sechseckige honigwabenähnliche Form. Erfindungsgemäß besitzen die sogenannten Innenwände der Strukturkörper des verwendeten Katalysators eine Wandstärke von 0,8 mm bis 1,4 mm, vorzugsweise 1,0 mm bis 1,2 mm. Die Außenwände der Strukturkörper besitzen dagegen vorzugsweise eine Wandstärke von 1,0 mm bis 2,0 mm, besonders bevorzugt sind beim verwendeten Katalysator Außenwände mit einer Stärke von 1,4 mm bis 1,8 mm. Insbesondere werden solche Katalysatoren bevorzugt, bei denen der kürzeste Abstand zwischen zwei Wandmitten über den Querschnitt einer Zelle 7,9 mm bis 8,5 mm, besonders vorzugsweise 8,1 mm bis 8,3 mm, beträgt. Der eingesetzte Katalysator hat eine freie Öffnungsfläche von 70 bis 78 % und besitzt dabei, auch einen vergleichsweise guten Wert hinsichtlich des Druckverlustes über den Katalysator.

Der im Rahmen des erfindungsgemäßen Verfahrens verwendete Katalysator enthält als Hauptbestandteil Titandioxid, wobei das Titandioxid oder mindesten eine Vorläuferverbindung des Titandioxids vorzugsweise aus dem Sulfatprozess stammt. Geeigneterweise soll das Titandioxid überwiegend in der Anatas-Form vorliegen. Ferner kann der Katalysator Sulfate enthalten, die sich im Allgemeinen positiv auf seine katalytischen Eigenschaften auswirken. So kann das Sulfat beispielsweise als H₂SO₄, die an ein Oxid angelagert ist, oder als Hydrogensulfat oder als Sulfat eines im Katalysator enthaltenen Metalls vorliegen, beispielsweise des Titans oder Vanadiums oder Wolframs, es kann aber auch beispielsweise als Bariumsulfat gebunden vorliegen. Bevorzugt enthält der Katalysator wolframhaltige und/oder molybdänhaltige und/oder vanadiumhaltige Oxide. Der Wolframoxid und/oder Molybdänoxidgehalt beträgt im Katalysator vorzugsweise weniger als 12 Gew.-%, der Vanadiumoxidgehalt liegt üblicherweise bei weniger als 3 Gew.-%. Für stark SOxhaltige Abgase werden Katalysatoren mit Vanadiumoxidgehalten von weniger als 1 Gew.-% bevorzugt. Der Katalysator ist üblicherweise porös, dabei liegt das Porenvolumen im Allgemeinen bei 0,1 bis 0,5 cm²/g und die BET-Oberfläche bei Werten von 40 bis 120 m²/g. Um die mechanischen Eigenschaften des Vollkatalysators zu verbessern, kann dieser Glasfasern enthalten. Im Allgemeinen handelt es sich dabei um sogenannte E- oder S-Glasfasern mit einem Durchmesser von 8 bis 20 µm und einer Länge von 40 µm bis hin zu 4 mm.

Im Allgemeinen wird der eingesetzte Katalysator aus einer Katalysatormasse auf Basis von Titandioxid sowie weiterer aktiver Komponenten und üblicher Verarbeitungshilfsstoffe durch Extrusion zu einem Formkörper geformt, der Formkörper wird schonend getrocknet und der resultierende Grünkörper in einem Temperaturbereich bis zu 700 °C kalziniert. So erhaltene Katalysatorstrukturkörper können auch nachträglich noch mit weiteren aktiven Komponenten versehen werden, beispielsweise durch eine Tauchimprägnierung und anschließender thermischer Nachbehandlung. Die sogenannten Stirnflächen der An- bzw. Abströmseite der späteren Katalysatorstrukturkörper können zusätzlich gehärtet werden, um dem durch Flugstaub bedingten Abtrag der Strukturkörper, auch Abrasion genannt, entgegenzuwirken. Dadurch kann die Standzeit der Katalysatoren nochmals deutlich verlängert werden. Ein solches Härtungsverfahren ist beispielsweise aus der DE-OS 42 29 255 bekannt, so dass man auch bei den im Rahmen des erfindungsgemäßen Verfahrens verwendeten Katalysatoren geeigneterweise den Anströmbereich oder den Anström- und Abströmbereich der Strukturkörper härtet.

Mit einer spezifischen Oberfläche, die vorzugsweise im Bereich von 385 m²/m³ bis 440 m²/m³ liegt, ermöglicht der eingesetzte Katalysator im Vergleich zum 10,0 p-Katalysator - bei gleicher NOx-Abscheideleistung und ohne Verstopfungsgefahr - eine erhebliche Kosteneinsparung beim Anlagenbetreiber, insbesondere im Hinblick auf die Größe und den Platzbedarf eines neu zu bauenden SCR-Reaktors, im Hinblick auf ein deutlich kleineres Katalysatorvolumen bei der Bestückung des Reaktors und nicht zuletzt im Hinblick auf die Betriebskosten des Reaktors für Beheizung und Gebläseleistung.

Im Allgemeinen betreibt man das erfindungsgemäße Verfahren zur selektiven katalytischen Reduktion von Stickoxiden in Abgasen aus Verbrennungsanlagen unter Zusatz von Ammoniak bei einer Temperatur im Bereich von 150 bis 450 °C und an sich bekannter Katalysatorbelastung (Raumgeschwindigkeiten von 1000 bis 10000 h⁻¹). Beim erfindungsemäßen Verfahren durchströmt man den Katalysator vorzugsweise mit einer Abgasgeschwindigkeit von 1 bis 10 m/s i. N., besonders vorzugsweise mit 2 bis 7 m/s i. N..

Das erfindungsgemäße Verfahren kann in staubhaltigen Abgasen aus solchen Verbrennungsanlagen durchgeführt werden, die im Wesentlichen mit fossilen Brennstoffen, Holz, Biomasse, Stroh, Torf, Rinde, Papier und/oder Reststoffen befeuert werden. Die in solchen Abgasen hinter Kessel bzw. Ofen vorherrschenden Stäube können sehr unterschiedliche Zusammensetzungen und auch sehr verschiedene Eigenschaften besitzen. Man findet beispielsweise Stäube mit sehr feinem Korn und engem Kornspektrum, die unter anderem zum Anhaften oder Verkleben neigen und auch rasch verdichten können. Auch kennt man Stäube, die auffällig grobe Partikel von 1 mm und mehr enthalten, selbst faustgroße Stücke wurden in SCR-Reaktoren gefunden. Man beobachtet hier beispielsweise Grobkorn mit schichtartigem Aufbau. Es werden im Allgemeinen Grobpartikel beobachtet, die kugelförmig oder birnenförmig sind, auch brockige und unregelmäßige Partikel können auftreten, selbst flache blattförmige Grobpartikel wurden beobachtet. Man hat gefunden, dass die chemischen und physikalischen Eigenschaften der Stäube in der Regel stark von der Feuerungsart und den Befeuerungsmaterialien abhängig sind. Man unterscheidet dabei zwischen primären und sekundären Vorgängen bei der Staubbildung. Die primären Vorgänge spielen sich direkt im Verbrennungsraum ab. Hier spielt auch der Ausbrand eine wichtige Rolle. Gerade bei Verbrennungsanlagen, wie beispielsweise ballastkohlebefeuerten Kraftwerken, in Kraftwerken mit Schmelzkammerfeuerung und/oder in Kraftwerken mit Schmelzkammer- und Zyklonfeuerung, in Kraftwerken mit sogenannten Low-NOx-Brennern, können staubhaltige Abgase mit Grobpartikeln hinter Kessel anfallen, die im Wesentlichen auf solchen primären Vorgängen beruhen. In Verbrennungsanlagen, die beispielsweise mit Papier, Stroh oder Holz befeuert werden, können grobe und insbesondere leichte Partikel aus dem Brennraum ausgetragen werden. Auch können sich gröbere Partikel beispielsweise durch Sinterprozesse im Brennraum anfallender Stäube sowie auch durch Aggregation sowie Agglomerierung in der weiteren Abgasführung hinter dem Verbrennungsraum bilden; solche Vorgänge sind Beispiele für eine sekundäre Staubpartikelbildung. Andererseits zeichnen sich z. B. Abgase aus Öfen zur Herstellung von Zement durch besonders hohe Staubgehalte, in der Regel ohne größere Partikel, aus.

Beim erfindungsgemäßen Verfahren enthalten die zu reinigenden Abgase im Allgemeinen Staub in Mengen von 2 bis 200 g/Nm³, vorzugsweise 2 bis 150 g/N³, besonders vorzugsweise 3 bis 50 g/N³.

Das erfindungsgemäße Verfahren führt man in solchen Abgasen durch, die Staub mit Grobpartikelanteil enthalten, wobei die Grobpartikel größer als 1 mm sind, die Größe der Grobpartikel sollte im Wesentlichen jedoch 6 mm nicht überschreiten.

In Abgasen, deren Stäube Grobpartikel enthalten, die größer als 6 mm sind, schaltet man beim erfindungsgemäßen Verfahren dem Katalysator geeigneterweise eine sogenannte Grobpartikelauffangvorrichtung vor. Die Grobpartikelauffangvorrichtung besteht im Wesentlichen aus einem Gitter oder Netz, dessen lichte Raster- oder Maschenweite 6 mm oder weniger als 6 mm beträgt. Als Grobpartikelfänger können aber auch zellenartige Strukturkörper aus gesintertem keramischen Material mit einem Pitch von beispielsweise 6 mm eingesetzt werden. Geeigneterweise soll beim erfindungsgemäßen Verfahren die Grobpartikelauffangvorrichtung in einem Abstand von wenigstens 5 cm vor der Anströmseite des Katalysators angeordnet sein. Um die dabei aufgefangenen Grobpartikel in zeitlichen Abständen oder kontinuierlich aus dem Rauchgaskanal zu entfernen, führt man die Grobpartikelauffangvorrichtung geeigneterweise beweglich aus. Zwischen der Anströmseite des Katalysators und der Grobpartikelauffangvorrichtung kann zusätzlich z. B. ein Strömungsgleichrichter in den an sich bekannten technischen Ausführungsweisen angeordnet werden.

Titandioxidhaltige Katalysatoren, wie sie für die reduktive Zerstörung von Stickoxiden in Abgasen aus Verbrennungsanlagen eingesetzt werden, sind in der Regel in der Lage, halogenierte organische Verbindungen, insbesondere chlororganische Verbindungen wie z. B. polychlorierte Dibenzo-pdioxine, polychlorierte Dibenzofurane sowie andere polychlorierte Kohlenwasserstoffe, abzubauen (VGB-Konferenz "Chemie im Kraftwerk 1993" in Essen - Vortrag K8: "Dioxin-Abbau durch Wabenkatalysatoren"). Auch beim erfindungsgemäßen Verfahren können am DeNOx-Katalysator gleichzeitig Stickoxide und halogenierte organische Verbindungen abgebaut werden.

### Legende der Abbildungen:

### Legende zu Fig. 1:

Fig. 1 zeigt eine bevorzugte Ausführungsform eines Strukturkörpers des erfindungsgemäßen Katalysators
1 Strukturkörper mit quadratischer Querschnittsfläche
2 Strömungsrichtung
3 Außenmaß der Querschnittsfläche
4 Außenwand des Strukturkörpers
5 innenwände des Strukturkörpers
6 quadratische Zelle

### Legende zu Fig. 2:

Fig. 2 zeigt einen Ausschnitt aus der Querschnittsfläche senkrecht zur Strömungsrichtung einer bevorzugten Ausführungsform eines Strukturkörpers des erfindungsgemäßen Katalysators
4 Außenwand des Strukturkörpers
5 Innenwände des Strukturkörpers
6 quadratische Zelle
7 kürzester Abstand zwischen zwei Innenwand- bzw. Stegmitten (Pitch)
8 Innenwandstärke
9 Außenwandstärke

## Patentansprüche

1. Verfahren zur reduktiven Zerstörung von Stickstoffoxiden in staubhaltigen Abgasen mit einem waben- bzw. zellenförmigen Katalysator, der aus monolithischen Strukturkörpern besteht, die von parallel zu ihrer Längsachse verlaufenden Kanälen mit waben- bzw. zellenförmigen Querschnitt durchzogen sind, wobei der Katalysator als Hauptbesfandteil Titanoxid enthält,
wobei Abgase, die Staub in Mengen von 2 bis 200 g/Nm³ enthalten und deren Staub Grobpartikel größer 1 mm und kleiner oder gleich 6 mm enthält mit einer Abgasgeschwindigkeit von mehr als 0,5 m/s durch den Katalysator geleitet wird,
wobei die Katalysatorstrukturkörper eine offene Frontfläche von 70 bis 78 % besitzen, wobei die Kanäle der Strukturkörper einen hydraulischen Durchmesser von 6,8 mm bis 7,8 mm aufweisen und wobei die Innenwände der Strukturkörper eine Wandstärke von 0,8 mm bis 1,4 mm besitzen.

2. Verfahren nach Anspruch 1, wobei die zu reinigenden Abgase Staub in Mengen von 2 bis 150 g/Nm³ enthalten.

3. Verfahren nach Anspruch 1 oder 2, wobei die Abgase in Verbrennungsanlagen anfallen, die mit fossilen Brennstoffen, Holz, Biomasse, Stroh, Torf, Rinde, Papier und/oder Reststoffen befeuert werden.

4. Verfahren nach einem der Ansprüche 1 bis 3, wobei man bei Durchleitung eines Abgases, dessen Staub Grobpartikel enthält, dem Katalysator eine Grobpartikelauffangvorrichtung vorschaltet.

5. Verfahren nach Anspruch 4, wobei die Grobpartikelauffangvorrichtung im Wesentlichen aus einem Gitter oder Netz besteht, dessen lichte Raster- oder Maschenweite 6 mm oder weniger als 6 mm beträgt.

6. Verfahren nach Anspruch 4 oder 5, wobei die Grobpartikelauffangvorrichtung in einem Abstand von wenigstens 5 cm vor der Anströmseite des Katalysators angeordnet ist.

7. Verfahren nach einem der Ansprüche 4 bis 6, wobei die Grobpartikelauffangvorrichtung derart beweglich aufgeführt ist, um die aufgefangenen Grobpartikel in zeitlichen Abständen oder kontinuierlich zu entfernen.

8. Verfahren nach einem der Ansprüche 1 bis 7, wobei die Abgase in ballastkohlebefeuerten Kraftwerken, in Kraftwerken mit Schmelzkammerfeuerung und/oder in Kraftwerken mit Schmelzkammer- und Zyklonfeuerung anfallen.

9. Verfahren nach Anspruch 8, wobei die Abgase Staub in Mengen von 3 bis 50 g/Nm³ enthalten.

10. Verfahren nach Anspruch 8 oder 9, wobei der Staub im Wesentlichen keine Grobpartikel größer 6 mm enthält.

11. Verfahren nach Anspruch 1, wobei die Abgase in Anlagen zur Herstellung von Zement anfallen.

## Claims

1. A process for the reductive destruction of nitrogen oxides in dust-containing flue gases, including a catalyst with honeycomb or cellular configuration that is made up of monolithic structural bodies which are perforated by channels with a honeycomb or cellular cross section extending parallel to the longitudinal axis of the structural bodies, wherein the major component of the catalyst contains titanium oxide,
in which flue gases containing dust in quantities from 2 to 200 g/Nm³, and in which dust the coarse particles are larger than 1 mm and smaller than or equal to 6 mm, are passed through the catalyst at an exhaust speed of more than 0.5 m/s,
in which the structural bodies of the catalyst have an open frontal area of 70 to 78 %, in which the channels of the structural bodies have a hydraulic diameter of 6.8 mm to 7.8 mm and in which the interior walls of the structural bodies have a wall thickness of 0.8 mm to 1.4 mm.

2. The process according to Claim 1, wherein the flue gases to be cleaned contain dust in quantities of 2 to 150 g/Nm³.

3. The process according to either of Claims 1 or 2, wherein the flue gases are generated in combustion plants that are fuelled by fossil fuels, wood, biomass, straw, peat, bark, paper and/or waste materials.

4. The process according to any of Claims 1 to 3, wherein a device for trapping coarse particles is installed upstream of the catalyst when a flue gas containing coarse particles is passed through the catalyst.

5. The process according to Claim 4, wherein the device for trapping coarse particles essentially includes a grating or net the aperture size of whose grid or mesh is 6 mm or less than 6 mm.

6. The process according to either of Claims 4 or 5, wherein the device for trapping coarse particles is disposed at a distance at least 5 cm in front of the inflow side of the catalyst.

7. The process according to any of Claims 4 to 6, wherein the device for trapping coarse particles is disposed so as to be movable in such manner that the trapped coarse particles can be removed periodically or continuously.

8. The process according to any of Claims 1 to 7, wherein the flue gases are generated in power stations fuelled by bunker coal, in power stations with slag tap furnaces and/or in power stations with slag tap and cyclone furnaces.

9. The process according to Claim 8, wherein the flue gases contain dust in quantities of 3 to 50 g/Nm³.

10. The process according to either of Claims 8 or 9, wherein the dust essentially contains no coarse particles that are larger than 6 mm.

11. The process according to Claim 1, wherein the flue gases are generated in facilities for the production of cement.

## Revendications

1. Procédé pour la destruction réductrice des oxydes d'azote dans les gaz d'échappement à l'aide d'un catalyseur en forme de nid d'abeille ou alvéolaire, constitué de corps structurés monolithiques traversés par des canaux de section en forme de nid d'abeille ou alvéolaire parallèlement à leur axe longitudinal, sachant que le catalyseur comporte, comme principal constituant, de l'oxyde de titane,
où des gaz d'échappement chargés de poussières dans des quantités comprises entre 2 et 200 g/Nm³ et dont les poussières contiennent des particules grossières supérieures à 1 mm et inférieures ou égales à 6 mm, traversent le catalyseur à une vitesse supérieure à 0,5 m/s,
où les corps structurés de catalyseur comportent une surface d'ouverture frontale comprise entre 70 et 78 %, où les canaux des corps structurés présentent un diamètre hydraulique compris entre 6,8 mm et 7,8 mm et où les parois intérieures des corps structurés présentent une épaisseur comprise entre 0,8 mm et 1,4 mm.

2. Procédé selon la revendication 1 où les gaz à épurer sont chargés de poussières dans des quantités comprises entre 2 et 150 g/Nm³.

3. Procédé selon la revendication 1 ou 2 où les gaz d'échappement sont émis par des installations d'incinération chauffés aux combustibles fossiles, au bois, à la biomasse, à la paille, à la tourbe, à l'écorce, au papier et / ou aux résidus stabilisés.

4. Procédé selon l'une des revendications 1 à 3 où, en cas de passage d'un gaz d'échappement dont les poussières contiennent des particules grossières, un dispositif de retenue des particules grossières est prévu en amont du catalyseur.

5. Procédé selon la revendication 4 où le dispositif de retenue des particules grossières est essentiellement constitué d'une grille ou d'un filet d'une ouverture de maille égale ou inférieure à 6 mm.

6. Procédé selon la revendication 4 ou 5 où le dispositif de retenue des particules grossières est disposé à une distance de 5 cm au moins devant le côté entrée du catalyseur.

7. Procédé selon l'une des revendications 4 à 6 où le dispositif de retenue des particules grossières est conçu de manière mobile afin d'éliminer dans des intervalles de temps ou en continu les particules grossières retenues.

8. Procédé selon l'une des revendications 1 à 7 où les gaz d'échappement sont émis par des centrales chauffées aux combustibles secondaires, des centrales à foyer à cendres fondues et / ou des centrales à foyer à cendres fondues et à foyer cyclone.

9. Procédé selon la revendication 8 où les gaz d'échappement sont chargés de poussières dans des quantités comprises entre 3 et 50 g/Nm³.

10. Procédé selon la revendication 8 ou 9 où les poussières ne contiennent, pour l'essentiel, pas de particules grossières supérieures à 6 mm.

11. Procédé selon la revendication 1 où les gaz d'échappement sont émis par des installations de fabrication de ciment.
